(19) Europäisches Patentamt / European Patent Office / Office européen des brevets

(11) **EP 2 150 589 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **08759814.0**

(22) Anmeldetag: **20.05.2008**

(51) Int Cl.:
*C09C 1/48* *(2006.01)*        *C09C 1/60* *(2006.01)*
*B82Y 30/00* *(2011.01)*      *C09D 7/12* *(2006.01)*
*C09D 11/037* *(2014.01)*    *C08K 3/04* *(2006.01)*
*C09D 17/00* *(2006.01)*

(86) Internationale Anmeldenummer:
**PCT/EP2008/056206**

(87) Internationale Veröffentlichungsnummer:
**WO 2008/148641 (11.12.2008 Gazette 2008/50)**

(54) **FLAMMRUSS**

LAMP BLACK

NOIR DE CARBONE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.06.2007 DE 102007026214**

(43) Veröffentlichungstag der Anmeldung:
**10.02.2010 Patentblatt 2010/06**

(73) Patentinhaber: **Orion Engineered Carbons GmbH 60528 Frankfurt am Main (DE)**

(72) Erfinder:
• **ZOCH, Heinz**
  **63477 Maintal (Dörnigheim) (DE)**
• **KARL, Alfons**
  **63584 Gründau (DE)**
• **MATHIAS, Johann**
  **63796 Kahl (DE)**
• **ZIMMERMANN, Jutta**
  **63755 Alzenau (DE)**
• **FRÖHLICH, Joachim**
  **53332 Bornheim (DE)**
• **DANNEHL, Manfred**
  **63796 Kahl (DE)**
• **STENGER, Frank**
  **63755 Alzenau (DE)**

(74) Vertreter: **f & e patent
Fleischer, Engels & Partner mbB, Patentanwälte
Braunsberger Feld 29
51429 Bergisch Gladbach (DE)**

(56) Entgegenhaltungen:
EP-A- 1 529 818        JP-A- 63 201 009
US-A1- 2002 156 177    US-B1- 6 231 624

• "Carbon black dispersion" DIALOGUE, LIGNIN INSTITUTE, Bd. 12, Nr. 1, März 2003 (2003-03), XP002509707

EP 2 150 589 B1

**Beschreibung**

Die vorliegende Erfindung betrifft Flammruß, ein Verfahren zu dessen Herstellung und dessen Verwendung.

Es ist bekannt, dass die Flammruß-Apparatur aus einer gusseisernen Schale besteht, die den flüssigen oder gegebenenfalls geschmolzenen Rohstoff aufnimmt, und einer feuerfest ausgemauerten Abzugshaube. Der Rohstoff, in der Regel ein hocharomatisches Öl, wird kontinuierlich zugeführt, um in der Schale einen konstanten Rohstoff-Level aufrecht zu erhalten. Der Luftspalt zwischen Schale und Abzugshaube sowie der Unterdruck im System dienen zum Regulieren der Luftzufuhr und damit zur Einstellung der Eigenschaften. Infolge der Hitzestrahlung der Abzugshaube verdampft der Rohstoff und wird teilweise verbrannt, hauptsächlich jedoch in Industrieruß umgewandelt. Zur Abtrennung des Feststoffes werden die rußhaltigen Prozessgase nach dem Abkühlen durch ein Filter geleitet und der Ruß vom Abgas abgetrennt (Prof. Donnet, Carbon Black, MARCEL DEKKER Verlag, 1993, Second Edition, Seite 54 - 57).

Aus JP 63201009 A ist die Behandlung von Rußpulver, wie Channel- oder Furnacerußen, mit einer Kugelmühle bekannt. Mit Kugelmühlen erreicht man einen spezifischen Energieeintrag von 0,01 - 0,03 kW/l. Bei der Kugelmühle wird die Energie hauptsächlich über Scherung und Reibung übertragen (http://www.zoz.de/pdf_dateien/publications/v31.pdf, Manuscript von H. Zoz, Simoloyer®: major characteristics and features).

Ferner ist aus DE 43 36 548 ein Verfahren zur Herstellung von kugelförmigen Granulaten in einer Ringmatrizenpresse bekannt.

Aus EP 0 808 880 ist ein Verfahren zur Herstellung von silanisierter, niedrig verdickende Kieselsäure bekannt, wobei die hydrophobe silanisierte Kieselsäure durch mechanische Einwirkung destrukturiert/verdichtet wird.

Aus EP-A-1529818 sind Ruße, insbesondere Gasruße, mit einer OAN < 120 ml/100 g und aus US 6231624 sind Ruße mit einer DBP-Zahl kleiner 100 ml/100 g bekannt.

Ferner sind aus US 2002/156177 Furnaceruße mit niedrigen DBF-Werten bekannt.

Aus "Carbon black dispersion" DIALOGUE, LIGNIN INSTITUTE, Bd. 12, Nr. 1, März 2003 (2003-03), XP 002509707 und JP 63201009 A ist die Vermahlung von Ruß mit einer Kugelmühle bekannt.

Nachteile der bekannten Flammruße sind die herstellungsbedingten sehr hohen Strukturen, die in lösemittelhaltigen und wässerigen Systemen zu hohen Viskositäten führen und in Systemen nur geringe Füllgrade mit Flammruß ermöglichen.

Aufgabe der vorliegenden Erfindung ist es, einen Flammruß mit abgesenkter Struktur zur Verfügung zu stellen.

Gegenstand der Erfindung ist ein Flammruß, welcher dadurch gekennzeichnet ist, dass dieser einen DBP-Wert von kleiner 100 ml/100g, vorzugsweise kleiner 90 ml/100g, besonders bevorzugt kleiner 80 ml/100g, gemessen nach ASTM D 2414-00, hat.

Der erfindungsgemäße Flammruß kann eine CDBP, gemessen nach ASTM D 3493-00, von kleiner 62 ml/100g, vorzugsweise kleiner 58 ml/100g, besonders bevorzugt kleiner 55 ml/100g, haben.

Der erfindungsgemäße Flammruß kann eine Differenz zwischen DBP und CDBP von kleiner 35 ml/100g, vorzugsweise kleiner 30 ml/100g, besonders bevorzugt kleiner 20 ml/100g, haben.

Der erfindungsgemäße Flammruß kann eine gewichtsgemittelte Aggregatgröße von kleiner 500 nm, vorzugsweise kleiner 450 nm, besonders bevorzugt kleiner 400 nm, haben.

Der erfindungsgemäße Flammruß kann einen $D_{Mode}$ von kleiner 500 nm, vorzugsweise kleiner 450 nm, besonders bevorzugt kleiner 400 nm, haben.

Der erfindungsgemäße Flammruß kann eine BET- Oberfläche von 20 bis 400 m$^2$/g, vorzugsweise 30 bis 300 m$^2$/g, gemessen nach ASTM D 6556-00, haben.

Die Stampfdichte (Pulver) kann größer 300 g/l, vorzugsweise größer 400 g/l, gemessen nach DIN EN ISO 787-11, sein.

Der erfindungsgemäße Flammruß kann einen Flüchtigengehalt, gemessen nach DIN 53552, von größer 0,6 Gew.-%, vorzugsweise größer 0,8 Gew.-%, besonders bevorzugt größer 1,0 Gew.-%, haben.

Der erfindungsgemäße Flammruß kann einen pH-Wert, gemessen nach DIN EN ISO 787-9, von kleiner 7,0, vorzugsweise kleiner 6,0, besonders bevorzugt kleiner 5,0, haben.

Der erfindungsgemäße Flammruße kann eine Anzahl gemittelte Primärteilchengröße, gemessen nach ASTM D 3849-95a, von 50 bis 400 nm, vorzugsweise von 75 bis 300 nm, besonders bevorzugt von 100 bis 200 nm, haben.

Ein weiterer Gegenstand der Erfindung ist ein Verfahren zur Herstellung der erfindungsgemäßen Flammruß, welches dadurch gekennzeichnet ist, dass man Flammruße mechanisch in einer Rotorkugelmühle zerkleinert.

Die Dauer der mechanischen Zerkleinerung kann 0,1 - 120 Minuten, vorzugsweise 0,2 - 60 Minuten, besonders bevorzugt 0,5 - 10 Minuten, betragen. Die mechanische Zerkleinerung kann im trockenen Zustand und gegebenenfalls unter Zusatz von Additiven erfolgen.

Der Energieeintrag kann bei der Zerkleinerung mit einer Rotorkugelmühle größer 0,35 kW/l, vorzugsweise größer 0,45 kW/l, besonders bevorzugt größer 0,55 kW/l, ganz besonders bevorzugt größer 0,75 kW/l, sein. Der Energieeintrag kann fast ausschließlich über Kollision und weniger über Reibung und Scherung erfolgen.

Die Rotorkugelmühle kann bei Drücken von 10$^{-4}$ mbar bis 3 bar betrieben werden. Die Rotorkugelmühle kann bei Temperaturen von -20 bis +100 °C betrieben werden. Die Rotorkugelmühle kann gekühlt werden, beispielsweise mit Wasser. Die Rotorkugelmühle kann und unter Inertgas, Luft oder anderen Gasen betrieben werden. Die Umdrehungszahl des Rotors kann zwischen 200 und 1800 Upm variieren. Die relative Geschwindigkeit der Mahlkugeln kann bis zu 14 m/s betragen. Die Mahlkugeln können aus Stahl, Zirkonoxid und anderen geeigneten Materialien hergestellt sein.

Durch das erfindungsgemäße Verfahren kann der DBP-Wert des Ausgangsrußes um mindestens 20 ml/100g, vorzugsweise um mindestens 30 ml/100g, besonders bevorzugt um mindestens 40 ml/100g, abgesenkt werden.

Additive können gasförmig, flüssig, fest oder Lösungen von Stoffen in Flüssigkeiten sein. Gasförmige Additive können beispielsweise Sauerstoff, Stickstoff, Kohlendioxid, Wasserstoff, Ammoniak, Ozon oder nitrose Gase sein. Flüssige Additive können beispielsweise Wasser, Alkohole, Kohlenwasserstoffe oder Öle sein. Feste Additive können Salze, Wachse, Netzmittel oder Tenside sein.

Die erfindungsgemäßen Flammruße können in Rußdispersionen, Lacksystemen, Druckfarben, Kunststoffen oder Kautschuken verwendet werden.

Ein weiterer Gegenstand der Erfindung ist ein Lack, welcher dadurch gekennzeichnet ist, dass dieser den erfindungsgemäßen Flammruß enthält.

Der erfindungsgemäße Lack kann Hilfstoffe, wie beispielsweise Wasser, organische Lösemittel, Bindemittel, Harze, Alterungsschutzmittel, UV-Schutzmittel, Ozonschutzmittel, Antioxidantien, Fotoinitiatoren, Entschäumer, Mattierungsmittel, Trocknungsinhibitoren, Härtungsmittel, Vernetzungsmittel, Verarbeitungshilfsmittel, Viskositätsregulierer, oberflächenaktive Stoffe, Säureregulierer, Füllstoffe, Haftvermittler, Verlaufsmittel, Initiatoren, Katalysatoren, Biozide oder Wachse, enthalten.

Ein weiterer Gegenstand der Erfindung ist eine Künststoffmischung, welche dadurch gekennzeichnet ist, dass diese mindestens einen Kunststoff und den erfindungsgemäßen Flammruß enthält.

Die erfindungsgemäße Kunststoffmischung kann Hilfstoffe, wie beispielsweise Alterungsschutzmittel, Wärmestabilisatoren, UV-Schutzmittel, Ozonschutzmittel, Antioxidantien, Härtungsmittel, Vulkanisationsmittel, Vernetzungsmittel, Reaktionsbeschleuniger, Reaktionsverzögerer, Verarbeitungshilfsmittel, Antistatik-Mittel, Nukleierungsmittel, Gleitmittel, Weichmacher, Schmiermittel, Viskositätsregulierer, Anti-Blockmittel, oberflächenaktive Stoffe, Streckmittel, Säurefänger, Metall-Deaktivatoren, Wachse oder Treibmittel, enthalten.

Als Kunstoffe können thermoplastische Polyolefine (TPO), beispielsweise Polyethylen (PE, beispielsweise PE-LD oder PE-HD) oder Polypropylen (PP), Propylen-Copolymere, Acrylnitril-Butadien-Styrol (ABS), Polyvinylchlorid (PVC, beispielsweise PVC-P, PVC-U), Polystyrol (PS), Polystyrolacrylnitril (SAN), Polyamide (PA, beispielsweise PA6, PA66, PA11, PA12 oder PA46), Polycarbonat (PC), Polybutylenterephthalat (PBT), Polyethylenterephthalat (PET), Polyphenylenoxid (PPO), Polyphenylenether (PPE), Ethlyenvinylacetat (EVA), Polyurethan (PUR), Polymethylmethacrylat (PMMA), Polyvinylalkohol (PVA) und deren Gemische eingesetzt werden.

Ein weiterer Gegenstand der Erfindung ist eine Kautschukmischung, welche dadurch gekennzeichnet ist, dass diese mindestens einen Kautschuk und den erfindungsgemäßen Flammruß enthält.

Als Kautschuk können Naturkautschuk und/oder Synthesekautschuke eingesetzt werden. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR);

- Polyisopren (IR);

- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;

- Chloropren (CR) ;

- Isobutylen/Isopren-Copolymerisate (IIR);

- Butadien/Acrylnitril-Copolymere mit Acrylnitrilgehalten von 5 bis 60, vorzugsweise 10 bis 50 Gew.-% (NBR), besonders bevorzugt 10 bis 40 Gew.-% (NBR), ganz besonders bevorzugt 15 bis 35 Gew.-% (NBR);

- teilhydrierter oder vollständig hydrierter NBR-Kautschuk (HNBR);

- Ethylen/Propylen/Dien-Copolymerisate (EPDM);

- oben genannte Kautschuke, die zusätzlich funktionelle Gruppen besitzen, wie zum Beispiel Carboxy-, Silanol- oder Epoxygruppen, beispielsweise Epoxidierter NR, Carboxy-funktionalisierter NBR oder Silanol- (-SiOH) bzw. Silylalkoxy-funktionalisierter (-Si-OR) SBR;

sowie Mischungen dieser Kautschuke. Für PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukmischungen können weitere Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse,' Streckmittel, organische Säuren, Verzögerer, Metalloxide sowie Aktivatoren, wie beispielsweise Triethanolamin oder Hexantriol, enthalten.

Ein weiterer Gegenstand der Erfindung ist eine Rußdispersion, welche dadurch gekennzeichnet ist, dass diese den erfindungsgemäßen Flammruß enthält.

Die erfindungsgemäßen Rußdispersionen können organische Lösungsmittel und/oder Wasser enthalten.

Die erfindungsgemäßen Rußdispersionen können Biozide, Netzmittel und / oder Additive, wie Entschäumer, Viskositätsregulierer, Frostschuzmittel und Säureregulierer, enthalten.

Die erfindungsgemäßen Flammruße haben die Vorteile einer abgesenkten Struktur beziehungsweise mittleren Aggregatgröße und Breite der Aggregatgrößenverteilung, einer erhöhten Stampfdichte und Flüchtigengehalt.

Die erfindungsgemäßen Ruße haben in Lack die Vorteile, dass die Farbstärke zunimmt und der Farbton nahezu unbeeinflusst bleibt. Die erfindungsgemäßen Ruße haben in Kunststoff den Vorteil, dass die Farbstärke zunimmt. Die erfindungsgemäßen Ruße haben in Kautschuk den Vorteil, dass die Viskosität abnimmt und die Zugfestigkeit zunimmt.

**Beispiele:**

**Bestimmungsmethoden**

**pH-Wert:**

Die Bestimmung des pH-Wertes wird nach DIN EN ISO 787-9 durchgeführt.

**Flüchtige Anteile:**

Die Bestimmung der flüchtigen Anteile bei 950°C wird nach DIN 53552 durchgeführt.

**BET-Oberfläche:**

Die Bestimmung der BET-Oberfläche wird nach ASTM D 6556-00 durchgeführt.

**STSA-Oberfläche:**

Die Bestimmung der STSA-Oberfläche wird nach ASTM D 6556-00 durchgeführt.

**Tint:**

Die Bestimmung der Tint Strength wird nach ASTM D 3265-00 durchgeführt.

**CTAB-Oberfläche:**

Die Bestimmung der CTAB-Oberfläche wird nach ASTM D 3765-99 durchgeführt.

**Jodzahl:**

Die Bestimmung der Jodzahl wird nach ASTM D 1510-99 durchgeführt.

**DBP-Adsorption:**

Die Bestimmung der DBP- Adsorption wird nach ASTM D 2414-00 durchgeführt.

**CDBP-Adsorption:**

Die Bestimmung der CDBP- Adsorption wird nach ASTM D 3493-00 durchgeführt.

**Schüttdichte:**

Die Bestimmung der Schüttdichte erfolgt in Anlehnung an die DIN EN ISO 787-11. Der Pigmentruß wird vorsichtig unter Zuhilfenahme eines Trichters in einen 250 ml Messzylinder gefüllt. Während des Einfüllens wird der Zylinder in einem Winkel von 60° gehalten, bis die 250 ml - Markierung fast erreicht ist. Dann wird der Zylinder senkrecht gehalten und

genau bis zur 250 ml - Marke aufgefüllt. Aus dem Quotienten von Pigmentrußeinwaage in g und Pigmentrußvolumen in l ergibt sich die Schüttdichte in g/l. Der Pigmentruß wird nicht vorgetrocknet und darf beim Einfüllen nicht verdichtet werden.

**Stampfdichte:**

Die Bestimmung der Stampfdichte wird nach DIN EN ISO 787-11 durchgeführt.

**Feuchtegehalt:**

Die Bestimmung des Feuchtegehaltes wird nach DIN EN ISO 787-2 durchgeführt.

**Primärteilchengröße:**

Die Bestimmung der Primärteilchengröße wird nach ASTM D 3849-95a durchgeführt.

**AggregatgröBenverteilung:**

Zur Messung der Aggregatgrößenverteilungskurven wird eine Scheibenzentrifuge BI-DCP mit Rotlicht-Diode der Firma Brookhaven verwendet. Dieses Gerät wird speziell für die Bestimmung von Aggregatgrößenverteilungskurven von feinteiligen Feststoffen aus Extinktionsmessungen entwickelt und ist mit einem automatischen Mess- und Auswertungsprogramm zur Ermittlung der Aggregatgrößenverteilung ausgerüstet.

Zur Durchführung der Messungen wird zunächst eine Dispersionslösung aus 200 ml Ethanol, 5 Tropfen Ammoniaklösung und 0,5 g Triton X-100 und Auffüllen mit demineralisiertem Wasser'auf 1000 ml hergestellt. Weiterhin wird eine Spinflüssigkeit aus 0,5 g Triton X-100, 5 Tropfen Ammoniaklösung und Auffüllen mit demineralisiertem Wasser auf 1000 ml angefertigt.

Danach werden 20 mg Ruß mit 20 ml Dispersionslösung versetzt und in einem Kühlbad für die Dauer von 4,5 Minuten mit 100 Watt Ultraschalleistung (80% Pulse) in der Lösung suspendiert.

Vor Beginn der eigentlichen Messungen wird die Zentrifuge 30 Minuten bei einer Drehzahl von 11000 min$^{-1}$ betrieben. In die sich drehende Scheibe wird 1 ml Ethanol eingespritzt und danach vorsichtig mit 15 ml Spinflüssigkeit unterschichtet. Nach etwa einer Minute werden 250 $\mu$l der Rußsuspension eingespritzt, das Messprogramm des Gerätes gestartet und die Spinflüssigkeit in der Zentrifuge mit 50 $\mu$l Dodecan überschichtet. Von jeder zu messenden Probe wird eine Doppelbestimmung vorgenommen.

Die Auswertung der Rohdatenkurve erfolgt dann mit dem Rechenprogramm des Gerätes unter Berücksichtigung der Streulichtkorrektur und mit automatischer Anpassung der Basislinie.

Der $\Delta D_{50}$-Wert (FWHM) ist die Breite der Aggregatgrößenverteilungskurve bei der halben Peakhöhe. Der $D_{mode}$-Wert (Modalwert) ist die Aggregatgröße mit der größten Häufigkeit (Peakmaximum der Aggregatgrößenverteilungskurve).

**Schwarzzahl My und absoluter Farbtonbeitrag dM:**

1. Herstellen der Reagenzien

Rezeptur Verdünner

| Bestandteile | in g | in Gew.-% |
|---|---|---|
| Xylol | 1125 | 68,20 |
| Ethoxypropanol | 225 | 13,63 |
| Butanol | 150 | 9,09 |
| Baysilon OL 17, 10 %ig in Xylol | 75 | 4,54 |
| Butylglycol | 75 | 4,54 |
| **Gesamt** | **1.650** | **100,00** |

Rezeptur Baysilon

| Bestandteile | in g | in Gew.-% |
|---|---|---|
| Baysilon OL 17 | 10 | 10 |
| Xylol | 90 | 90 |
| **Gesamt** | **100** | **100** |

Komponente A

| Bestandteile | in g | in Gew.-% |
|---|---|---|
| Älkydal F 310, 60 %ig | 770 | 77 |
| Verdünner | 230 | 23 |
| **Gesamt** | **1.000** | **100** |

Komponente B

| Bestandteile | in g | in Gew.-% |
|---|---|---|
| Maprenal MF800, 55 %ig | 770 | 77 |
| Verdünner | 230 | 23 |
| **Gesamt** | **1.000** | **100** |

Die Bestandteile der 4 Rezepturen werden gemischt und in einem geeigneten Gefäß aufbewahrt.

2. Präparation des Schwarzlackes

Rezeptur des Schwarzlackes zur Bestimmung der Schwarzzahl My:

| Bestandteile | in g | in Gew.-% |
|---|---|---|
| Standard-Klarlack Komponente A | 27,3 | 65,3 |
| Standard-Klarlack Komponente B | 12,7 | 30,4 |
| Pigmentruß | 1,8 | 4,3 |

(fortgesetzt)

| Bestandteile | in g | in Gew.-% |
|---|---|---|
| Gesamt | 41,8 | 100 |

Zunächst werden die Lackkomponenten A und B in einen PTFE-Becher eingewogen, dann der bei 105 °C vorgetrocknete Pigmentruß zugewogen und 275 g Stahlkugeln (Ø = 3 mm) als Mahlkörper zugegeben. Schließlich wird die Probe in einem Skandexmischer 30 Minuten dispergiert.

Nach dem Dispergiervorgang wird ca. 1 - 2 ml Schwarzlack für den Aufstrich abgenommen und in einem Streifen von 5 cm Länge und ca. 1 cm Breite auf die Trägerplatte aufgetragen. Es ist darauf zu achten, dass sich im Lackstreifen keine Luftblasen befinden. Die Lackhantel wird über dem Lackstreifen aufgesetzt und gleichmäßig über die Platte gezogen. Es wird ein Aufstrich erzeugt, der ungefähr 10 cm lang und 6 cm breit ist. Der Lackaufstrich muss (im Abzug) mindestens 10 Minuten ablüften.

Anschließend wird die Probe in einem Trockner für 30 Minuten bei 130 °C eingebrannt. Die Proben können sofort nach dem Abkühlen oder später gemessen werden. Die Messungen können mit dem Messgerät: Pausch Q-Color 35, Software: WinQC+, durchgeführt werden. Die Messung erfolgt durch das Glas.

3. Berechnungen

3.1 Farbtonunabhängige Schwarzzahl My und farbtonabhängige Schwarzzahl Mc

Aus dem Normfarbwert Y der Messung (Lichtart D65/10) wird zunächst die farbtonunabhängige Schwarzzahl My (Gleichung 1) berechnet:

$$(1) \quad My = 100 \cdot \log\left(\frac{100}{Y}\right)$$

Anschließend wird die farbtonabhängige Schwarzzahl (Gleichung 2) berechnet:

$$(2) \quad Mc = 100 \cdot \left( \log\left(\frac{X_n}{X}\right) - \log\left(\frac{Z_n}{Z}\right) + \log\left(\frac{Y_n}{Y}\right) \right)$$

$X_n$ / $Z_n$ / $Y_n$ (DIN 6174) = Normfarbwerte des Koordinatenursprungs, bezogen auf die Lichtart und den Beobachter (DIN 5033 / Teil 7, Lichtart D65/10°)

$X_n = 94,81$ $Z_n = 107,34$ $Y_n = 100,0$

$X$ / $Y$ / $Z$ = Normfarbwerte, die aus den Messungen der Probekörper berechnet werden.

3.2 Absoluter Farbtonbeitrag dM

Aus den Schwarzzahlen Mc und My wird der Absolute Farbtonbeitrag dM (Gleichung 3) berechnet:

$$(3) \quad dM = Mc - My$$

**Grauzahl Gy und absoluter Farbtonbeitrag dG:**

1. Herstellen des Graulackes

Rezeptur für den Graulack zur Bestimmung der Grauzahl Gy:

| Bestandteile | in g | in Gew.-% |
|---|---|---|
| Pigmentpaste weiß (ZP23-0044, BASF) | 31,0 | 62, 9 |
| Härter Luwipal 012 (BASF) | 2,3 | 4,7 |
| Schwarzlack aus vorher beschriebenen Methode "Schwarzzahl My und absoluter Farbtonbeitrag dM" | 16,0 | 32,4 |
| Gesamt | 49,3 | 100 |

Die Weißpaste muss vor der Verwendung mit dem Skandex aufgerührt werden.

Zunächst werden die Pigmentpaste weiß, der Härter Luwipal 012 und der Schwarzlack in einen PTFE-Becher eingewogen, und 60 g Chromanit-Stahlkugeln (Ø = 3 mm) als Mahlkörper zugegeben. Anschließend wird die Probe in einem Skandexmischer 30 Minuten dispergiert.

Nach dem Dispergiervorgang wird ca. 1 - 2 ml Graulack für den Aufstrich abgenommen und in einem Streifen von 5 cm Länge und ca. 1 cm Breite auf die Trägerplatte aufgetragen. Es ist darauf zu achten, dass sich im Lackstreifen keine Luftblasen befinden. Die Lackhantel (90 $\mu$m Spalt) wird über dem Lackstreifen aufgesetzt und gleichmäßig über die Platte gesogen. Es wird ein Aufstrich erzeugt, der ungefähr 10 cm lang und 6 cm breit ist. Der Lackaufstrich muss (im Abzug) mindestens 10 Minuten ablüften.

Anschließend wird die Probe in einem Trockner für 30 Minuten bei 130 °C eingebrannt. Die Proben können sofort nach dem Abkühlen oder später gemessen werden. Die Messungen können mit dem Messgerät: Pausch Q-Color 35, Software: WinQC+, durchgeführt werden. Die Messung erfolgt an der Lackoberfläche.

2. Berechnungen

2.1 Farbtonunabhängige Grauzahl Gy und farbtonabhängige Grauzahl Gc

Aus dem Normfarbwert Y der Messung (Lichtart D65/10) wird zunächst die farbtonunabhängige Grauzahl Gy (Gleichung 1) berechnet:

$$(1) \quad Gy = 100 \cdot \log\left(\frac{100}{Y}\right)$$

Anschließend wird die farbtonabhängige Schwarzzahl (Gleichung 2) berechnet:

$$(2) \quad Gc = 100 \cdot \left(\log\left(\frac{X_n}{X}\right) - \log\left(\frac{Z_n}{Z}\right) + \log\left(\frac{Y_n}{Y}\right)\right)$$

$X_n$ / $Z_n$ / $Y_n$ (DIN 6174) = Normfarbwerte des Koordinatenursprungs, bezogen auf die Lichtart und den Beobachter (DIN 5033 / Teil 7, Lichtart D65/10°)

$X_n$ = 94,81 $Z_n$ = 107,34 $Y_n$ = 100,0

X / Y / Z = Normfarbwerte, die aus den Messungen der Probekörper berechnet werden.

2.2 Absoluter Farbtonbeitrag dG

Aus den Grauzahlen Gc und Gy wird der Absolute Farbtonbeitrag dG (Gleichung 3) berechnet:

$$(3) \quad dG = Gc - Gy$$

PVC-P-Farbstärke und Dispergierhärte:

Die Bestimmung der PVC-P-Farbstärke und Dispergierhärte wird nach DIN EN ISO 13900-2 durchgeführt.

**Vergleichsbeispiel 1 und Beispiele 2-4:**

Die Einstellungen zur Herstellung der Beispiele für die erfindungsgemäßen Ruße und des Vergleichsbeispiels 1 sind in der Tabelle 1 aufgeführt. Es wird eine Rotorkugelmühle des Typs Simoloyer® CM05 der Firma Zoz GmbH, 57482 Wenden, verwendet.

Tabelle 1:

| Beispiel | 1 (Vergleichsbeispiel) | 2 | 3 | 4 |
|---|---|---|---|---|
| Mahldauer min | 0 | 1 | 10 | 60 |

Bei den erfindungsgemäßen Beispielen wird der Mahlraum mit 7,5 kg Stahlkugeln mit einem Ø von 4,8 mm (Mahlkörperfüllgrad: 30%) und 600 g Flammruß gefüllt. Nach dem Einfüllen wird aus Sicherheitsgründen der Mahlraum vor dem Verschließen mit Stickstoff überschichtet. Die eingestellte Mühlendrehzahl beträgt 800 U/min. Um einen Temperaturanstieg in der Mühle zu vermeiden, wird der Mahlraum (doppelwandig) mit Wasser gekühlt, und die Mühle wird im Wechsel für jeweils eine Minute mit 800 U/min und 100 U/min betrieben. Die angegebene Mahldauer entspricht den Zeiten, bei denen die Mühle bei höchster Drehzahl (800 U/min) betrieben wird.

In der Tabelle 2 sind die analytischen Daten der erfindungsgemäßen Ruße sowie des Vergleichsrußes dargestellt. Als Vergleichsbeispiel (Beispiel 1) wird der unbehandelte Flammruß verwendet.

Tabelle 2:

| Beispiel | | 1 (Vergleichsbeispiel) | 2 | 3 | 4 |
|---|---|---|---|---|---|
| Mahldauer | min | 0 | 1 | 10 | 60 |
| Schüttdichte | g/l | 171 | 234 | 286 | 302 |
| Stampfdichte | g/l | 245 | 357 | 477 | 455 |
| DBP | ml/100g | 131,2 | 83 | 62,5 | 69,6 |
| CDBP | ml/100g | 66,5 | 54 | 50,8 | 51 |
| Jodzahl | mg/g | 34,2 | 38,7 | 56,1 | 115,9 |
| CTAB | $m^2$/g | 19,4 | 23,2 | 32,8 | 79,5 |
| BET | $m^2$/g | 28,5 | 35,2 | 57,4 | 184,2 |
| STSA | $m^2$/g | 18,5 | 21,1 | 29,5 | 76,3 |
| pH-Wert | | 8,4 | 6,7 | 4,5 | 3,6 |
| Flüchtige 950 °C | Gew.-% | 0,5 | 0,8 | 1,4 | 4,8 |
| Feuchte | Gew.-% | 0,3 | 0,4 | 0,4 | 0,6 |
| My | | 218,5 | 216,7 | 218,9 | 233,0 |
| dM | | -0,2 | -0,3 | -1,5 | -4,4 |
| Gy | | 63,2 | 66,4 | 70,5 | 77,2 |
| dG | | 10,1 | 10,4 | 10,8 | 10,1 |
| Tint | % | 26,3 | 29,1 | 33,1 | 29,9 |
| Gewichtsgemittelte Aggregatgröße | nm | 554 | 465 | 362 | 274 |
| $D_{Mode}$ | nm | 561 | 423 | 341 | 240 |
| FWHM | nm | 588 | 520 | 364 | 267 |
| FWHM/$D_{Mode}$ | | 1,05 | 1,23 | 1,07 | 1,11 |

(fortgesetzt)

| Beispiel | | 1 (Vergleichsbeispiel) | 2 | 3 | 4 |
|---|---|---|---|---|---|
| Spez. Oberfläche | m$^2$/g | 7,1 | 8, 5 | 10,6 | 14,8 |
| Anzahl gemittelte Aggregatgröße | nm | 278 | 227 | 202 | 124 |
| Anzahl gemittelte Primärteilchengröße | nm | 113,2 | 115,8 | 133,5 | 146,6 |

In der Tabelle 3 sind die PVC-P Farbstärken und die Dispergierhärten der erfindungsgemäßen Ruße sowie des Vergleichsrußes 1 angegeben. Als Vergleichsbeispiel 1 wird der unbehandelte Flammruß verwendet.

Tabelle 3:

| Ruß aus Beispiel | | 1 (Vergleichsbeispiel) | 2 | 3 |
|---|---|---|---|---|
| Farbstärke 160 °C | % | 37 | 42 | 47 |
| Farbstärke 130 °C | % | 37 | 40 | 47 |
| Dispergierhärte | | -2 | -3 | -2 |

In der nachfolgenden Tabelle 4 ist die für die Kautschukmischungen verwendete Rezeptur angegeben. Dabei bedeutet die Einheit phr Gewichtsanteile bezogen auf 100 Teile des eingesetzten Rohkautschuks. Der für die Beispielmischung verwendete Ruß ist der erfindungsgemäße Ruß aus Beispiel 3. Für die Referenzmischung wird der Ruß aus Vergleichsbeispiel 1 verwendet.

Tabelle 4

| Substanz | Menge [phr] | Menge [phr] |
|---|---|---|
| 1. Stufe | Referenzmischung | Beispielmischung |
| Buna EP G 545524 | 150 | 150. |
| Ruß | 120 | 120 |
| ZnO RS RAL 844.C | 5 | 5 |
| Stearinsäure EDENOR ST1 GS | 2 | 2 |
| LIPOXOL 4000 | 5 | 5 |
| SUNPAR 150 | 50 | 50 |
| Summe Stufe 1 | 332 | 332 |
| 2. Stufe | | |
| Batch Stufe 1 | | |
| Vulkacit MERKAPTO C | 1 | 1 |
| Perkacit TBzTD | 1,2 | 1,2 |
| RHENOCURE TP/S | 2 | 2 |
| Schwefel | 1,5 | 1,5 |

Die Rohstoffe sind von folgenden Lieferanten / Herstellern erhältlich: Buna von Lanxess AG, LIPOXOL 4000 von Brenntag GmbH, SUNPAR 150 von Sun Oil Company (Belgium) N.V., Vulkacit von Lanxess AG, Perkacit TBzTD (Tetrabenzylthiuramdisulfid) von Flexsys N.V., RHENOCURE TP/S von Rheinchemie GmbH, Stearinsäure von Caldic B.V. (Deutschland).
Die. Kautschukmischung wird zweistufig in einem Innenmischer gemäß Tabelle 5 hergestellt, wobei wirtschaftlich vertretbare Mischzeiten verwendet werden.

Tabelle 5:

|  | Stufe 1 |
| --- | --- |
| **Einstellungen** |  |
| Mischaggregat<br>Friktion<br>Drehzahl<br>Stempeldruck<br>Leervolumen<br>Füllgrad<br>Durchflußtemp. | Werner & Pfleiderer<br>1:1<br>50 min$^{-1}$<br>5,5 bar<br>1,6 L<br>0,55<br>80 °C |
| Mischvorgang |  |
| 0 bis 3 min<br>3 bis 4 min<br>4 bis 5 min<br><br>Batch-Temp.<br>Lagerung | Buna + Ruß + ZnO + Stearinsäure + Sunpar 150<br>Lipoxol 4000<br>mischen und ausfahren<br><br>120-140°C<br>24 h bei Raumtemperatur |
|  |  |
|  | Stufe 2 |
| **Einstellungen** |  |
| Mischaggregat<br>Drehzahl<br>Füllgrad<br>Durchflußtemp. | wie in Stufe 1 bis auf:<br>40 min$^{-1}$<br>0,52<br>80 °C |
| **Mischvorgang** |  |
| 0 bis 2 min<br>2 min<br><br><br><br><br>Batch-Temp. | Batch Stufe 1 + Vulkacit + Perkacit + RHENOCURE + Schwefel<br>ausfahren und auf Labormischwalzwerk homogenisieren* und Fell bilden (Durchmesser 200 mm, Länge 450 mm) Homogenisieren: 5x links, 5x rechts einschneiden und umklappen sowie 5x bei engem Walzenspalt (3 mm) und 5x bei weitem Walzenspalt (6 mm) stürzen und anschließend ein Fell ausziehen<br>90-105°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 6 angegebenen Prüfmethoden.

Tabelle 6

| **Physikalische Testung** | **Normen / Bedingungen** |
| --- | --- |
| ML 1+4, 100°C (2. Stufe) | DIN 53523/3, ISO 667 |
| Vulkameterprüfung, 165°C<br>$D_{max}$ - $D_{min}$<br>t10'%<br>t80% - t20% | DIN 53529/3, ISO 6502 |
| Zugversuch am Ring, 23°C (Zugfestigkeit, Spannungswerte, Bruchdehnung) | DIN 53504, ISO 37 |
| Shore-A-Härte, 23°C | DIN 53 505 |

(fortgesetzt)

| Physikalische Testung | Normen / Bedingungen |
|---|---|
| Ball-Rebound, 60°C | DIN EN ISO 8307 Stahlkugel 19 mm, 28 g |

In der Tabelle 7 sind die gummitechnischen Daten für Rohmischung und.Vulkanisat angegeben.

Tabelle 7

| Rohmischungsdaten | Einheit | Referenzmischung | Beispielmischung |
|---|---|---|---|
| ML(1+4) bei 100°C | [ME] | 54 | 36 |
| Dmax-Dmin | [dNm] | 13,2 | 9,4 |
| t 10% (170 °C) | [min] | 0,7 | 1,2 |
| t 90% (170 °C) | [min] | 10,0 | 13,9 |
| **Vulkanisatdaten** | | | |
| Zugfestigkeit | [MPa] | 5,5 | 7,7 |
| Spannungswert 100% | [MPa] | 2,8 | 1,2 |
| Spannungswert 300% | [MPa] | 4,9 | 5,0 |
| Spannungswert 300%/100% | [-] | 1,8 | 4,2 |
| Bruchdehnung | [%] | 370 | 480 |
| Shore-A-Härte | [SH] | 58 | 44 |
| Ball-Rebound, 60°C | [%] | 63,3 | 69,0 |

Aus den Ergebnissen in Tabelle 7 ist erkennbar, dass bei den hier verwendeten Mischzeiten die Beispielmischung, enthaltend den erfindungsgemäßen Flammruß, der Referenzmischung überlegen ist. Die Beispielmischung, enthaltend den erfindungsgemäßen Flammruß, zeigt eine niedrigere Viskosität (ML-Wert), eine höhere Zugfestigkeit, Bruchdehnung und Ball-Rebound sowie einen höheren Spannungswert 300%/100% Wert, der ein Maß für die Verstärkung ist, als die Referenzmischung.

Die Ergebnisse zeigen, dass die erfindungsgemäßen Ruße (Beispiele 2-4) einen DBP-Wert kleiner 100 ml/100g haben. Der Vorteil der erfindungsgemäßen Ruße äußert sich im Lack und im Kunststoff in einer höheren Farbstärke und im Kautschuk in einer geringeren Viskosität und einer höheren Zugfestigkeit.

Die erfindungsgemäßen Flammruße haben gegenüber Furnacerußen, Gasrußen und Channelrußen den Vorteil, dass sie eine breitere Primärteilchen- und Aggregatgrößenverteilung aufweisen.

**Patentansprüche**

1. Flammruß, **dadurch gekennzeichnet, dass** dieser einen DBP-Wert von kleiner 100 ml/100g, gemessen nach ASTM D 2414-00, hat.

2. Flammruß nach Anspruch 1, **dadurch gekennzeichnet, dass** die Stampfdichte größer 300 g/l ist.

3. Verfahren zur Herstellung von Flammruß nach Anspruch 1, **dadurch gekennzeichnet, dass** man Flammruße mechanisch in einer Rotorkugelmühle zerkleinert.

4. Verwendung der Flammruße nach Anspruch 1 in Rußdispersionen, Lacksystemen, Druckfarben, Kunststoffmischungen und Kautschukmischungen.

5. Lack, **dadurch gekennzeichnet, dass** dieser den Flammruß nach Anspruch 1 enthält.

6. Kunststoffmischung, **dadurch gekennzeichnet, dass** diese mindestens einen Kunststoff und den Flammruß nach Anspruch 1 enthält.

**7.** Kautschukmischung, **dadurch gekennzeichnet, dass** diese mindestens einen Kautschuk und den Flammruß nach Anspruch 1 enthält.

**8.** Rußdispersion, **dadurch gekennzeichnet, dass** diese den Flammruß nach Anspruch 1 enthält.

**Claims**

**1.** A lamp black, **characterized in that** its DBP value is smaller than 100 ml/100 g, measured to ASTM D 2414-00.

**2.** The lamp black as claimed in claim 1, **characterized in that** the compacted bulk density is greater than 300 g/l.

**3.** A process for the production of lamp black as claimed in claim 1, **characterized in that** lamp blacks are mechanically comminuted in a rotor ball mill.

**4.** The use of the lamp blacks as claimed in claim 1 in carbon black dispersions, coating material systems, printing inks, plastic mixtures, and rubber mixtures.

**5.** A coating material, **characterized in that** it comprises the lamp black as claimed in claim 1.

**6.** A plastic mixture, **characterized in that** it comprises at least one plastic and the lamp black as claimed in claim 1.

**7.** A rubber mixture, **characterized in that** it comprises at least one rubber and the lamp black as claimed in claim 1.

**8.** A carbon black dispersion, **characterized in that** it comprises the lamp black as claimed in claim 1.

**Revendications**

**1.** Noir de fumée, **caractérisé en ce que** celui-ci présente une valeur DBP inférieure à 100 ml/100 g, mesurée selon la norme ASTM D 2414-00.

**2.** Noir de fumée selon la revendication 1, **caractérisé en ce que** la densité de remplissage est supérieure à 300 g/l.

**3.** Procédé servant à fabriquer du noir de fumée selon la revendication 1, **caractérisé en ce que** l'on concasse des noirs de fumée mécaniquement dans un broyeur à galets.

**4.** Utilisation des noirs de fumée selon la revendication 1 dans des dispersions de suie, des systèmes de peinture, des encres d'impression, des mélanges synthétiques et des mélanges de caoutchouc.

**5.** Peinture, **caractérisée en ce que** celle-ci contient le noir de fumée selon la revendication 1.

**6.** Mélange synthétique, **caractérisé en ce que** celui-ci contient au moins une matière synthétique et le noir de fumée selon la revendication 1.

**7.** Mélange de caoutchouc, **caractérisé en ce que** celui-ci contient au moins un caoutchouc et le noir de fumée selon la revendication 1.

**8.** Dispersion de suie, **caractérisée en ce que** celle-ci contient le noir de fumée selon la revendication 1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 63201009 A
- DE 4336548
- EP 0808880 A

- EP 1529818 A
- US 6231624 B
- US 2002156177 A

**In der Beschreibung aufgeführte Nicht-Patentliteratur**

- **PROF. DONNET.** Carbon Black. MARCEL DEKKER Verlag, 1993, 54-57
- Carbon black dispersion. *DIALOGUE, LIGNIN INSTITUTE,* Marz 2003, vol. 12 (1

- **W. HOFMANN.** Kautschuktechnologie. Genter Verlag, 1980
- **W. HOFMANN.** Rubber Technology Handbook. Hanser Verlag, 1994